# EUROPEAN PATENT SPECIFICATION

(11) **EP 2 793 292 B1**
(45) Date of publication and mention of the grant of the patent: **20.05.2020**
(21) Application number: 13187261.6
(22) Date of filing: 03.10.2013
(51) Int. Cl.: H01M 2/26, H01M 2/34

(54) **Secondary battery**
Sekundärbatterie
Batterie secondaire

(30) Priority: 18.04.2013 KR 20130043205
(43) Date of publication of application: 22.10.2014
(73) Proprietor: Samsung SDI Co., Ltd., Yongin-si, Gyeonggi-do (KR)
(72) Inventor: Kim, Dukjung, Gyeonggi-do (KR)
(74) Representative: Mounteney, Simon James

(56) References cited:
- JP-A- 2003 187 856
- US-A1- 2010 279 170
- US-A1- 2012 164 501

## Description

### Background

### 1. Field

The present invention relates to a secondary battery.

### 2. Description of the Related Art

Unlike a primary battery which cannot be recharged, a secondary battery can be repeatedly charged and discharged. Low capacity batteries that use single battery cells are used as power sources for various portable small-sized electronic devices such as cellular phones, and camcorders. High power batteries that use tens of battery cells connected to each other in a battery pack are used as power sources for electric scooters, hybrid vehicles or electric vehicles.

Secondary batteries may be classified into different types such as cylindrical and prismatic batteries. The secondary battery is generally configured by accommodating an electrode assembly having a positive plate and a negative plate and a separator as an insulator located therebetween in a case with an electrolyte and installing a cap plate having electrode terminals in the case.

One of the evaluation tests of secondary battery safety is a nail penetration test. In the nail penetration test, a nail is allowed to penetrate in a direction in which the electrode assemblies are stacked to forcibly cause an internal short-circuit, and the extent of heat generated is investigated, thereby evaluating the safety of the secondary battery. In certain batteries, a large amount of short-circuit current is instantaneously generated due to the internal short-circuit, thereby resulting in abnormal heat generation and thermal runaway of the electrode assemblies. Accordingly, there is a demand for a secondary battery configured to improve safety of the secondary battery. US 2012/164501, US 2010/279170 and JP 2003/3187856 provide disclosures related to secondary batteries with current collecting plates between a plurality of electrode assemblies.

### Summary

According to an aspect, there is provided a secondary battery according to Claim 1. Details of embodiments are provided in the dependent claims. Aspects of the present invention provide a secondary battery, which can reduce the magnitude of short-circuit current or controlling the same at a constant level during a nail penetration test by forming a resistance increasing unit increasing the resistance of a current collector plate, thereby improving safety by preventing ignition and explosion of an electrode assembly.

In accordance with one aspect of the present invention, there is provided a secondary battery including a plurality of electrode assemblies, a current collector plate electrically connecting the plurality of electrode assemblies, a case accommodating the plurality of electrode assemblies, and a cap plate sealing the case, wherein the current collector plate has a resistance increasing unit formed therein to increase the resistance of the current collector plate.

The current collector plate includes a horizontal part positioned between the cap plate and the electrode assemblies, a vertical part bent and extending from the horizontal part, and extending parts formed at opposite sides of the vertical part, extending to a lower portion of the case and electrically connected to the electrode assemblies.

Each of the vertical part includes a first region extending from the horizontal part; and a second region extending from the first region and coupled to the extending parts.

The resistance increasing unit is formed in the second region.

In addition, a resistance increasing unit disclosed as being useful for the understanding but not forming part of the present invention may pass through the second region and may be formed as an open hole having one side opened.

The open hole may have a smaller width than the second region.

The resistance increasing unit may be formed as a throughhole passing through the second region.

The throughhole may have a smaller width than the second region.

The resistance increasing unit according to the present invention is formed in an uneven shape to increase a width of the second region.

The plurality of electrode assemblies may include a first electrode assembly and a second electrode assembly, and the extending parts may include a front surface extending part electrically connected to the first electrode assembly and a rear surface extending part electrically connected to the second electrode assembly.

The second region may connect the front surface extending part to the rear surface extending part.

The case may include a bottom surface, and a pair of long side surfaces and a pair of short side surfaces upwardly extending from the bottom surface, the vertical part may be parallel to the short side surfaces, and the extending parts may be parallel to the long side surfaces.

The plurality of electrode assemblies may be stacked to be parallel to the long side surface.

The secondary battery may further include an electrode terminal formed to pass through the cap plate. Here, the electrode terminal is electrically connected to the horizontal part.

The horizontal part may have a terminal hole to which the electrode terminal is coupled.

Each of the electrode assemblies may include a first electrode plate, a second electrode plate and a separator located between the first electrode plate and the second electrode plate, and the current collector plate may be electrically connected to a first uncoated portion of the first electrode plate or a second uncoated portion of the second electrode plate.

As described above, in the secondary battery according to the embodiment of the present invention, the resistance increasing unit is formed in the second region of the current collector plate connecting the first electrode assembly to the second electrode assembly, thereby reducing the magnitude of short-circuit current passing the second region and controlling the same at a constant level. Accordingly, the secondary battery according to the embodiment of the present invention may improve its safety by preventing abnormal ignition or explosion of the electrode assemblies.

Additional aspects and/or advantages of the invention will be set forth in part in the description which follows and, in part, will be obvious from the description, or may be learned by practice of the invention.

### Brief Description of the Drawings

The objects, features and advantages of the present invention will be more apparent from the following detailed description in conjunction with the accompanying drawings, in which:
FIG. 1 is a perspective view of a secondary battery according to an embodiment of the present invention;
FIG. 2 is a cross-sectional view of the secondary battery taken along the line I-I' of FIG. 1;
FIG. 3 is an exploded perspective view of a secondary battery not forming part of the present invention;
FIG. 4 is a perspective view of a first current collector plate not forming part of the present invention;
FIG.5 is a perspective view of a first current collector plate of a secondary battery according not forming part of the present invention, corresponding to the first current collector plate shown in FIG. 4; and
FIG. 6A is a perspective view of a first current collector plate of a secondary battery according to the present invention, corresponding to the first current collector plate shown in FIG. 4, and FIG. 6B is a cross-sectional view of the secondary battery taken along the line II-II' of FIG. 6A.

### Detailed Description

Hereinafter, examples of embodiments of the invention will be described in detail with reference to the accompanying drawings such that they can easily be made and used by those skilled in the art.

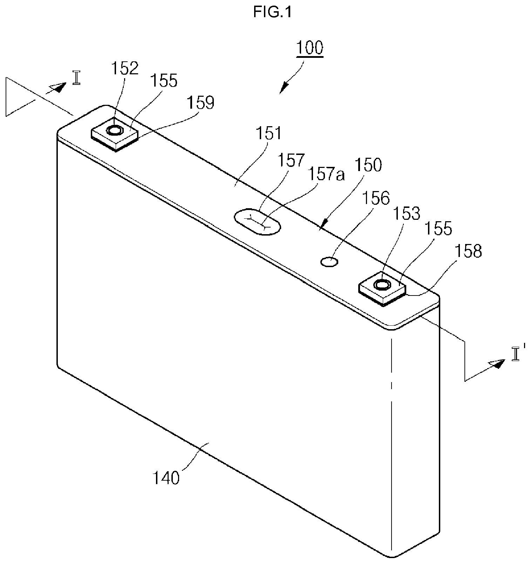

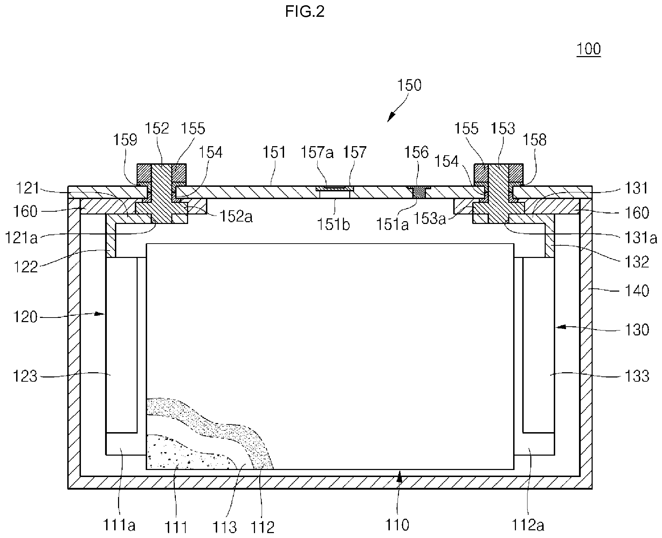

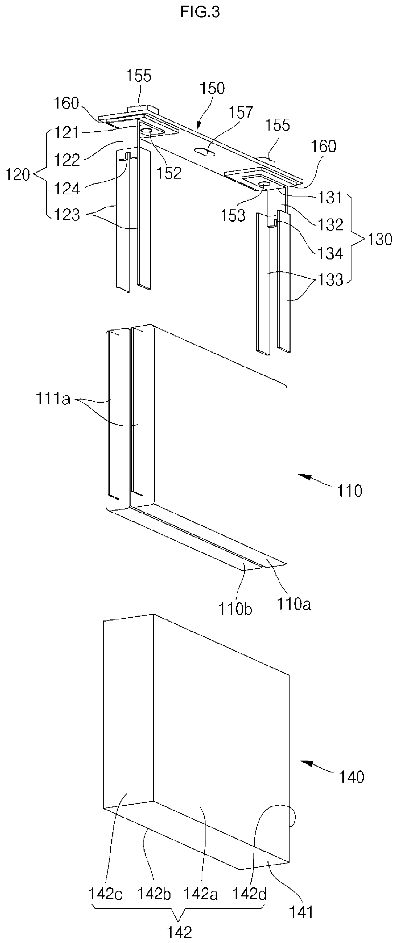

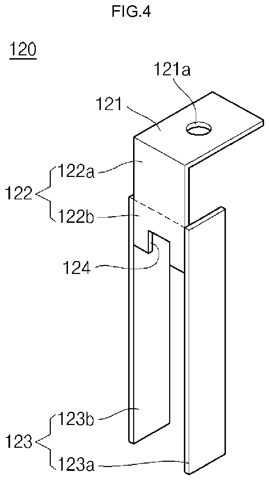

FIG. 1 is a perspective view of a secondary battery according to an embodiment of the present invention, FIG. 2 is a cross-sectional view of the secondary battery taken along the line I-I' of FIG. 1, FIG. 3 is an exploded perspective view of a secondary battery not forming part of the present invention, and FIG. 4 is a perspective view of a first current collector plate not forming part of the present invention.

Referring to FIGS. 1 to 4, a secondary battery 100 includes electrode assemblies 110, a first current collector plate 120, a second current collector plate 130, a case 140 and a cap assembly 150.

Each of the electrode assemblies 110 is formed by winding or laminating a stacked structure having a first electrode plate 111, a separator 113 and a second electrode plate 112, which are formed of a thin plate or layer. Here, the first electrode plate 111 may function as a negative electrode and the second electrode plate 112 may function as a positive electrode, or vice versa.

The first electrode plate 111 is formed by applying a first electrode active material, such as graphite or carbon, on a first electrode collector plate formed of metal foil, such as nickel or copper foil. The first electrode plate 111 includes a first electrode uncoated portion 111a on which the first electrode active metal is not applied. The first electrode uncoated portion 111a may function as a passage for current flowing between the first electrode plate 111 and the outside of the first electrode plate 111. However, the present invention does not limit the material of the first electrode plate 111 to those listed herein.

The second electrode plate 112 is formed by applying a second electrode active material, such as a transition metal, on a second electrode collector plate formed of such as aluminum foil. The second electrode plate 112 includes a second electrode uncoated portion 112a on which the second electrode active metal is not applied. The second electrode uncoated portion 112a functions as a passage for current flowing between the second electrode plate 112 and the outside of the second electrode plate 112. However, the present invention does not limit the material of the second electrode plate 112 to those listed herein.

The separator 113 is located between the first electrode plate 111 and the second electrode plate 112 to prevent short circuiting and allow the movement of lithium ions. The separator 113 may be formed of, for example, polyethylene, polypropylene, or combined film of polypropylene and polyethylene. However, the present invention does not limit the material of the separator 113 to those listed herein.

Each of the electrode assemblies 110 and an electrolyte are accommodated within the case 140. The electrolyte may include an organic solvent such as ethylene carbonate (EC), propylene carbonate (PC), diethyl carbonate (DEC), ethyl methyl carbonate (EMC), or dimethyl carbonate (DMC), and a lithium salt such as LiPF₆ or LiBF₄. The electrolyte may be a liquid, a solid, or a gel.

In addition, a plurality of electrode assemblies 110 are accommodated in the case 140. In one embodiment, as shown in FIG. 3, two of the electrode assemblies 110 are accommodated in the case 140. One electrode assembly positioned ahead in the case 140 is referred to as a first electrode assembly 110a, and one electrode assembly positioned behind in the case 140 is referred to as a second electrode assembly 110b.

The first current collector plate 120 may be formed of, for example, copper or a copper alloy, and contacts the first electrode uncoated portion 111a protruding from an end of the electrode assembly 110. In practice, the first current collector plate 120 is welded to the first electrode uncoated portion 111a to be electrically connected to the first electrode plate 111. Referring to FIG. 4, the first current collector plate 120 includes a first horizontal part 121, a first vertical part 122, first extending parts 123 and a first resistance increasing unit 124.

The first horizontal part 121 is installed between a top portion of the electrode assemblies 110 and a bottom portion of the cap assembly 150 in the form of a plate. In detail, the first horizontal part 121 is formed to be generally parallel to a cap plate 151 of the cap assembly 150. In addition, the first horizontal part 121 has a first terminal hole 121a formed therein. A first electrode terminal 152 of the cap assembly 150 may be fitted into and coupled to the first terminal hole 121a.

The first vertical part 122 is bent and extends from an end of the first horizontal part 121. The first vertical part 122 is formed to be generally perpendicular to the first horizontal part 121 and the cap plate 151 and is formed to be generally parallel to a side surface 142 of the case 140. In particular, the first vertical part 122 is formed to be generally parallel to short side surfaces 142c and 142d of the case 140.

The first vertical part 122 includes a first region 122a and a second region 122b. The first region 122a is a part connected to the first horizontal part 121, and the second region 122b is a region downwardly extending from the first region 122a. In addition, the first extending parts 123 are coupled to the second region 122b. In practice, the second region 122b serves to connect the first electrode assembly 110a to the second electrode assembly 110b. In other words, the first extending parts 123 are connected to the first electrode assembly 110a and the second electrode assembly 110b, and the second region 122b connects the first extending parts 123 to each other. In addition, the first resistance increasing unit 124 to be described below is formed in the second region 122a.

The first extending parts 123 are positioned on both side surfaces of the first vertical part 122. In one embodiment, the first extending parts 123 are coupled to opposite sides of the second region 122b. In addition, the first extending parts 123 are coupled to the overall side surface of the second region 122b and are formed to extend from the second region 122b. In addition, the first extending parts 123 are formed to be parallel to the long side surfaces 142a and 142b of the case 140 and are coupled to the first electrode uncoated portions 111a of the electrode assemblies 110. Therefore, each of the first extending parts 123 may be formed to have lengths equal to or smaller than those of the first electrode uncoated portions 111a.

The first extending parts 123 include a front surface extending part 123a and a rear surface extending part 123b. The front surface extending part 123a and the rear surface extending part 123b face and are opposite to each other. The front surface extending part 123a is coupled to the first electrode assembly 110a, and the rear surface extending part 123b is coupled to the second electrode assembly 110b. In detail, the first electrode uncoated portion 111a of the first electrode assembly 110a is welded to the front surface extending part 123a, and the first electrode uncoated portion 111a of the second electrode assembly 110b is welded to the rear surface extending part 123b.

The first resistance increasing unit 124 is formed in the second region 122b of the first vertical part 122. In addition, the first resistance increasing unit 124 is formed in the second region 122b and is formed as an open hole having one side opened, i.e., a notch. Therefore, a longitudinal width of the second region 122b connecting the front surface extending part 123a and the rear surface extending part 123b is reduced by the first resistance increasing unit 124, and the resistance of the second region 122b increases. In addition, a movement path of current flowing from the front surface extending part 123a to the rear surface extending part 123b narrows by the first resistance increasing unit 124. In other words, when the first resistance increasing unit 124 is formed in the second region 122b, a bottleneck occurs in which the current flowing through the second region 122b concentrates in one direction, thereby increasing the resistance of the second region 122b.

The first resistance increasing unit 124 is formed to have a longitudinal width smaller than a width of the second region 122b to allow the current to flow from the front surface extending part 123a to the rear surface extending part 123b. In addition, the first resistance increasing unit 124 may be formed in any shape so long as it can reduce the longitudinal width of the second region 122b. For example, the first resistance increasing unit 124 may be formed of various shapes, such as a rectangle, a triangle, a circle, or an ellipse having one side opened.

A nail penetration test is generally used as one of evaluation tests of secondary battery safety. In the nail penetration test, a nail is allowed to penetrate in a direction in which the electrode assemblies are stacked to forcibly generate internal short-circuit, and the extent of heat generated is investigated, thereby evaluating the safety of the secondary battery. If the internal short-circuit is caused by the nail passing through the first electrode assembly, a large amount of short-circuit current is instantaneously generated. The short-circuit current flows in to the second electrode assembly through the second region, and abnormal heat generation and thermal runaway of the electrode assemblies may occur due to the internal short-circuit current.

However, in the secondary battery 100, since the first resistance increasing unit 124 is formed in the second region 122b connecting the first electrode assembly 110a to the second electrode assembly 110b, the resistance of the second region 122b is relatively large. Therefore, the magnitude of the short-circuit current passing the second region 122b can be reduced or controlled to be at a constant level. Accordingly, the secondary battery 100 may have improved safety by suppressing abnormal heat generation.

The second current collector plate 130 is formed of a conductive material, for example, aluminum or an aluminum alloy, and contacts the second electrode uncoated portion 112a protruding from the other end of each of the electrode assemblies 110. In practice, the second current collector plate 130 is welded to the second electrode uncoated portion 112a to be electrically connected to the second electrode plate 112. The second current collector plate 130 includes a second horizontal part 131, a second vertical part 132, second extending parts 133 and a second resistance increasing unit 134.

The second current collector plate 130 has substantially the same configuration as the first current collector plate 120 shown in FIG. 4, and repeated explanations will be omitted.

The case 140 is formed of a conductive metal, such as aluminum, an aluminum alloy or a nickel plated steel and has an approximately hexahedron shape provided with an opening through which the electrode assemblies 110, the first current collector plate 120 and the second current collector plate 130 are inserted and placed. Since the case 140 and the cap assembly 150 are illustrated in an assembled state in FIG. 2, the opening of the case 140 is not shown. However, it will be appreciated that the opening corresponds to a substantially opened portion of the edge of the cap assembly 150. In addition, the case 140 includes a bottom surface 141 and side surfaces 142 upwardly extending from the bottom surface 141. The side surfaces 142 include a pair of long side surfaces 142a and 142b facing each other, and a pair of short side surfaces 142c and 142d connecting the long side surfaces 142a and 142b and facing each other. In one embodiment, the inner surface of the case 140 may be treated to be insulated from the electrode assemblies 110, the first current collector plate 120, the second current collector plate 130 and the cap assembly 150. In one embodiment, the case 140 may have a polarity and may serve as, for example, a positive electrode.

The cap assembly 150 is coupled to the case 140. In one embodiment, the cap assembly 150 includes the cap plate 151, the first electrode terminal 152, the second electrode terminal 153, a gasket 154, and a terminal plate 155. In addition, the cap assembly 150 further includes a plug 156, a vent plate 157, a connection member 158, an upper insulation member 159, and a lower insulation member 160.

The cap plate 151 closes the opening of the case 140. The cap plate 151 may be formed of the same material the case 140. For example, the cap plate 151 may be coupled to the case 140 by laser welding. In one embodiment, the cap plate 151 and the case 140 may have the same polarity.

The first electrode terminal 152 is electrically connected to the first current collector plate 120 while passing through one side of the cap plate 151. The first electrode terminal 152 is formed in a pillar shape. In addition, the first electrode terminal 152 upwardly protrudes and extends from the cap plate 151, and a flange 152a is formed at a lower portion of the cap plate 151 to prevent the first electrode terminal 152 from being dislodged from the cap plate 151. A region of the first electrode terminal 152 positioned under the flange 152a is fitted into the first terminal hole 121a of the first current collector plate 120. In one embodiment, the first electrode terminal 152 is insulated from the cap plate 151.

The second electrode terminal 153 is electrically connected to the second current collector plate 130 while passing through the other side of the cap plate 151. Since the second electrode terminal 153 has the same shape as the first electrode terminal 152, repeated explanations will be omitted. In one embodiment, the second electrode terminal 153 may be electrically connected to the cap plate 151.

The gasket 154 is formed of an insulating material, and is located between the cap plate 151 and the first and second electrode terminals 152 and 153 to seal spaces between the cap plate 151 and the first and second electrode terminals 152 and 153. The gasket 154 prevents the introduction of moisture into the secondary battery 100 or the leakage of the electrolyte from the secondary battery 100.

The terminal plate 155 is coupled to the first electrode terminal 152 and the second electrode terminal 153. In addition, the terminal plate 155 is welded to the first electrode terminal 152 and the second electrode terminal 153, thereby fixing the first electrode terminal 152 and the second electrode terminal 153 to the cap plate 151. In other words, boundary regions between each of the first electrode terminal 152 and the second electrode terminal 153, exposed to the upper portion of the cap plate 151, and the terminal plate 155, are welded to each other. For example, laser beams are applied to the boundary regions between each of the upwardly exposed first and second electrode terminals 152 and 153 and the terminal plate 155, thereby welding the boundary regions to each other by fusing and cooling.

The plug 156 closes an electrolyte injection hole 151a of the cap plate 151. The vent plate 157 is installed in a vent hole 151b of the cap plate 151 and has a notch 157a to be opened at a set pressure.

The connection member 158 is formed such that the second electrode terminal 153 is fitted into a region between the second electrode terminal 153 and the cap plate 151 and makes close contact with the cap plate 151 and the gasket 154 through the terminal plate 155. The connection member 158 is electrically connected to the second electrode terminal 153 and the cap plate 151.

The upper insulation member 159 is formed such that the first electrode terminal 152 is fitted into a region between the first electrode terminal 152 and the cap plate 151 and makes close contact with the cap plate 151 and the gasket 154 through the terminal plate 155. The upper insulation member 159 insulates the first electrode terminal 152 and the cap plate 151 from each other.

The lower insulation member 160 is formed between each of the first current collector plate 120 and the second current collector plate 130 and the cap plate 151, thereby preventing unnecessary short-circuits.

As described above, in the secondary battery 100, the first resistance increasing unit 124 which increases the resistance of the first current collector plate 120 is formed in the second region 122b of the first current collector plate 120 connecting the first electrode assembly 110a and the second electrode assembly 110b, thereby reducing the magnitude of short-circuit current or controlling the same at a constant level during a nail penetration test. Accordingly, the secondary battery 100 may have improved safety by suppressing abnormal heat generation of the first and second electrode assemblies 110a and 110b.

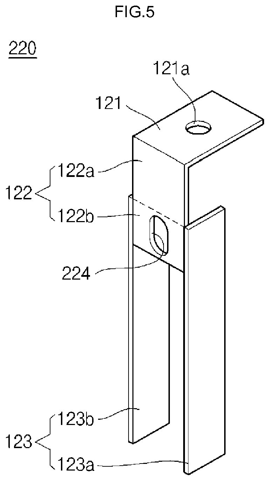

FIG. 5 is a perspective view of a first current collector plate of a secondary battery according to another embodiment not forming part of the present invention, corresponding to the first current collector plate shown in FIG. 4.

The first current collecting plate for a secondary battery shown in FIG. 5 is substantially the same first current collecting plate 120 shown in FIG. 4 in view of configurations and functions, except for a configuration of a first resistance increasing unit 224 of a first current collector plate 220. Thus, repeated illustration and explanations of the same functional components will be omitted, and the following description will focus on the first resistance increasing unit 224 of the first current collector plate 220.

Referring to FIG. 5, the first current collector plate 220 includes a first horizontal part 121, a first vertical part 122, first extending parts 123 and a first resistance increasing unit 224.

The first resistance increasing unit 224 is formed in a second region 122b of the first vertical part 122. In addition, the first resistance increasing unit 224 formed in the second region 122b is formed as a throughhole passing through the center of the second region 122b. Thus, a longitudinal width of the second region 122b connecting a front surface extending part 123a and a rear surface extending part 123b is reduced by the throughhole and the resistance of the second region 122b increases. In addition, a movement path of current flowing from the front surface extending part 123a to the rear surface extending part 123b narrows by the throughhole. In other words, if the first resistance increasing unit 224 is formed in the second region 122b in the form of a throughhole, a bottleneck occurs, in which the current flowing through the second region 122b concentrates in opposite directions of the throughhole, thereby increasing the resistance of the second region 122b.

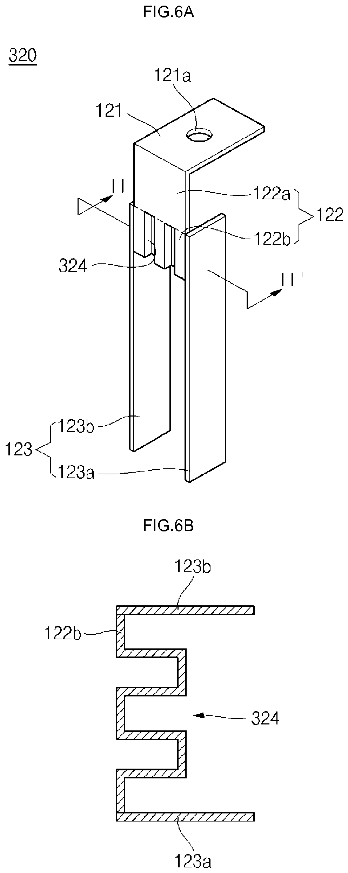

FIG. 6A is a perspective view of a first current collector plate of a secondary battery according the present invention, corresponding to the first current collector plate shown in FIG. 4, and FIG. 6B is a cross-sectional view of the secondary battery taken along the line II - II' of FIG. 6A.

The first current collecting plate for a secondary battery shown in FIG. 6 is substantially the same first current collecting plate 120 shown in FIG. 4 in view of configurations and functions, except for a configuration of a first resistance increasing unit 324 of a first current collector plate 320. Thus, repeated illustration and explanations of the same functional components will be omitted, and the following description will focus on the first resistance increasing unit 324 of the first current collector plate 320.

Referring to FIGS. 6A and 6B, the first current collector plate 320 includes a first horizontal part 121, a first vertical part 122, first extending parts 123 and the first resistance increasing unit 324.

The first resistance increasing unit 324 is formed in a second region 122b of the first vertical part 122. In addition, the first resistance increasing unit 324 connects a front surface extending part 123a to a rear surface extending part 123b and is formed in an uneven shape or a block-S pattern shape. In other words, the first resistance increasing unit 324 comprises a plurality of corrugations formed in the second region. Therefore, a horizontal width of the second region 122b connecting the front surface extending part 123a to the rear surface extending part 123b is effectively increased by the first resistance increasing unit 324. In other words, since the uneven first resistance increasing unit 324 is formed in the second region 122b, the horizontal width of the second region 122b is effectively increased, and therefore the resistance of the second region 122b may also be increased. As described above, if the horizontal width of the second region 122b is increased by the first resistance increasing unit 324, it is relatively difficult for the current to pass the second region 122b. Accordingly, the magnitude of short-circuit current passing the second region 122b can be reduced or controlled to be at a constant level. In addition, the first resistance increasing unit 324 may be formed in any shape so long as it can increase the horizontal width of the second region 122b.

Although the secondary battery according to embodiments have been described in detail hereinabove, it should be understood that many variations and modifications of the basic inventive concept herein described, which may appear to those skilled in the art, will still fall within the scope of the exemplary embodiments of the present invention as defined by the appended claims.

## Claims

1. A secondary battery (100) comprising:
a plurality of electrode assemblies (110);
a current collector plate (320) electrically connecting the plurality of electrode assemblies together;
a case (140) accommodating the plurality of electrode assemblies; and
a cap plate (151) sealing the case, wherein the current collector plate (320) includes:
a horizontal part (121) located between the cap plate and the electrode assemblies;
a vertical part (122) bent and extending from the horizontal part, wherein the vertical part includes a first region (122a) extending from the horizontal part (121) and a second region (122b) extending from the first region (122a);
extending parts (123) formed at opposing sides of the vertical part and coupled to the second region, extending to a lower portion of the case (140), and electrically connected to the electrode assemblies (110); and
a resistance increasing unit (324) on the second region (122b),
wherein the resistance increasing unit (324) comprises a plurality of corrugations disposed vertically and connecting one of the extending parts (123a) to the other of the extending parts (123b) to increase the resistance of the second region.

2. The secondary battery of claim 1, wherein the plurality of electrode assemblies comprise a first electrode assembly (110a) and a second electrode assembly (110b), and the extending parts (123) include a front surface extending part (123a) electrically connected to the first electrode assembly and a rear surface extending part (123b) electrically connected to the second electrode assembly.

3. The secondary battery of claim 2, wherein the second region (122b) connects the front surface extending part (123a) to the rear surface extending part (123b).

4. The secondary battery of any one of the preceding claims, wherein the case includes a bottom surface (141), a pair of long side surfaces (142a, 142b), and a pair of short side surfaces (142c, 142d) upwardly extending from the bottom surface, wherein the vertical part (122) is substantially parallel to the short side surfaces, and wherein the extending parts (123) are substantially parallel to the long side surfaces.

5. The secondary battery of claim 4, wherein the plurality of electrode assemblies (110) are stacked to be substantially parallel to the long side surfaces (142a, 142b).

6. The secondary battery of any one of the preceding claims, further comprising an electrode terminal (152) passing through the cap plate (151), wherein the electrode terminal is electrically connected to the horizontal part (121), and
wherein the horizontal part (121) has a terminal hole (121a) to which the electrode terminal (152) is coupled.

7. The secondary battery of any one of the preceding claims, wherein each of the electrode assemblies (110) includes a first electrode plate (111), a second electrode plate (112), and a separator (113) located between the first electrode plate and the second electrode plate, and wherein the current collector plate (120) is electrically connected to a first uncoated portion (111a) of the first electrode plate or a second uncoated portion (112a) of the second electrode plate.

## Patentansprüche

1. Sekundärbatterie (100), umfassend:
eine Mehrzahl von Elektrodenanordnungen (110);
eine Stromkollektorplatte (320), welche elektrisch die Mehrzahl von Elektrodenanordnungen miteinander verbindet;
ein Gehäuse (140), welches die Mehrzahl von Elektrodenanordnungen aufnimmt; und
eine Kappenplatte (151), welche das Gehäuse abdichtet, wobei die Stromkollektorplatte (320) umfasst:
einen horizontalen Teil (121), welcher zwischen der Kappenplatte und den Elektrodenanordnungen angeordnet ist;
einen vertikalen Teil (122), welcher gebogen ist und sich von dem horizontalen Teil erstreckt, wobei der vertikale Teil einen ersten Bereich (122a), welcher sich von dem horizontalen Teil (121) erstreckt, und einen zweiten Bereich (122b), welcher sich von dem ersten Teil (122a) erstreckt, umfasst;
ausstreckende Teile (123), welche auf gegenüberliegende Seiten des vertikalen Teils geformt sind und mit dem zweiten Bereich gekoppelt sind, welcher sich zu einem unteren Abschnitt des Gehäuses (140) erstreckt, und welche elektrisch mit den Elektrodenanordnungen (110) verbunden sind; und
eine widerstandserhöhende Einheit (324) auf dem zweiten Bereich (122b),
wobei die widerstandserhöhende Einheit (324) eine Mehrzahl von Wellungen umfasst, welche vertikal angeordnet sind und einen der ausstreckenden Teile (123a) mit dem anderen der ausstreckenden Teile (123b) verbinden, um den Widerstand des zweiten Bereichs zu erhöhen.

2. Sekundärbatterie nach Anspruch 1, wobei die Mehrzahl von Elektrodenanordnungen eine erste Elektrodenanordnung (110a) und eine zweite Elektrodenanordnung (110b) umfassen und die ausstreckenden Teile (123) einen Vorderflächen-Ausstreckteil (123a), welcher elektrisch mit der ersten Elektrodenanordnung verbunden ist, und einen Rückflächen-Ausstreckteil (123b), welcher elektrisch mit der zweiten Elektrodenanordnung verbunden ist, umfassen.

3. Sekundärbatterie nach Anspruch 2, wobei der zweite Bereich (122b) den Vorderflächen-Ausstreckteil (123a) mit dem Rückflächen-Ausstreckteil (123b) verbindet.

4. Sekundärbatterie nach einem der vorhergehenden Ansprüche, wobei das Gehäuse eine Bodenfläche (141), ein Paar langer Seitenflächen (142a, 142b) und ein Paar kurzer Seitenflächen (142c, 142d) umfasst, welche sich nach oben von der Bodenfläche erstrecken, wobei der vertikale Teil (122) im Wesentlichen zu den kurzen Seitenflächen parallel ist und wobei die ausstreckenden Teile (123) im Wesentlichen parallel zu den langen Seitenflächen sind.

5. Sekundärbatterie nach Anspruch 4, wobei die Mehrzahl von Elektrodenanordnungen (110) gestapelt sind, um im Wesentlichen zu den langen Seitenflächen (142a, 142b) parallel zu liegen.

6. Sekundärbatterie nach einem der vorhergehenden Ansprüche, ferner umfassend einen Elektrodenanschluss (152), welcher durch die Kappenplatte (151) durchgeht, wobei der Elektrodenanschluss mit dem horizontalen Teil (121) elektrisch verbunden ist, und
wobei der horizontale Teil (121) ein Anschlussloch (121a) aufweist, mit dem der Elektrodenanschluss (152) gekoppelt ist.

7. Sekundärbatterie nach einem der vorhergehenden Ansprüche, wobei jede der Elektrodenanordnungen (110) eine erste Elektrodenplatte (111), eine zweite Elektrodenplatte (112) und einen Abscheider (113) umfasst, welcher zwischen der ersten Elektrodenplatte und der zweiten Elektrodenplatte angeordnet ist, und wobei die Stromkollektorplatte (120) mit einem ersten nicht beschichteten Abschnitt (111a) der ersten Elektrodenplatte oder mit einem zweiten nicht beschichteten Abschnitt (112a) der zweiten Elektrodenplatte elektrisch verbunden ist.

## Revendications

1. Batterie secondaire (100) comprenant :
une pluralité d'ensembles d'électrodes (110) ;
une plaque de collecteur de courant (320) qui connecte électriquement la pluralité d'ensembles d'électrodes ensemble ;
un boîtier (140) qui loge la pluralité d'ensembles d'électrodes ; et
une plaque formant capuchon (151) qui scelle hermétiquement le boîtier, dans laquelle la plaque de collecteur de courant (320) inclut :
une partie horizontale (121) qui est localisée entre la plaque formant capuchon et les ensembles d'électrodes ;
une partie verticale (122) qui est fléchie et qui s'étend depuis la partie horizontale, dans laquelle la partie verticale inclut une première région (122a) qui s'étend depuis la partie horizontale (121) et une seconde région (122b) qui s'étend depuis la première région (122a) ;
des parties d'extension (123) qui sont formées au niveau de côtés opposés de la partie verticale et qui sont couplées à la seconde région, qui s'étendent jusqu'à une section inférieure du boîtier (140) et qui sont connectées électriquement aux ensembles d'électrodes (110) ; et
une unité d'augmentation de résistance (324) sur la seconde région (122b),
dans laquelle l'unité d'augmentation de résistance (324) comprend une pluralité d'ondulations qui sont disposées verticalement et qui connectent l'une des parties d'extension (123a) à l'autre des parties d'extension (123b) pour augmenter la résistance de la seconde région.

2. Batterie secondaire selon la revendication 1, dans laquelle la pluralité d'ensembles d'électrodes comprennent un premier ensemble d'électrodes (110a) et un second ensemble d'électrodes (110b), et les parties d'extension (123) incluent une partie d'extension de surface avant (123a) qui est connectée électriquement au premier ensemble d'électrodes et une partie d'extension de surface arrière (123b) qui est connectée électriquement au second ensemble d'électrodes.

3. Batterie secondaire selon la revendication 2, dans laquelle la seconde région (122b) connecte la partie d'extension de surface avant (123a) à la partie d'extension de surface arrière (123b).

4. Batterie secondaire selon l'une quelconque des revendications qui précèdent, dans laquelle le boîtier inclut une surface de fond (141), une paire de surfaces latérales longues (142a, 142b) et une paire de surfaces latérales courtes (142c, 142d) qui s'étendent vers le haut depuis la surface de fond, dans laquelle la partie verticale (122) est sensiblement parallèle aux surfaces latérales courtes et dans laquelle les parties d'extension (123) sont sensiblement parallèles aux surfaces latérales longues.

5. Batterie secondaire selon la revendication 4, dans laquelle la pluralité d'ensembles d'électrodes (110) sont empilés de telle sorte qu'ils soient sensiblement parallèles aux surfaces latérales longues (142a, 142b).

6. Batterie secondaire selon l'une quelconque des revendications qui précèdent, comprenant en outre une borne d'électrode (152) qui passe au travers de la plaque formant capuchon (151), dans laquelle la borne d'électrode est connectée électriquement à la partie horizontale (121) ; et
dans laquelle la partie horizontale (121) comporte un trou de borne (121a) auquel la borne d'électrode (152) est couplée.

7. Batterie secondaire selon l'une quelconque des revendications qui précèdent, dans laquelle chacun des ensembles d'électrodes (110) inclut une première plaque d'électrode (111), une seconde plaque d'électrode (112) et un séparateur (113) qui est localisé entre la première plaque d'électrode et la seconde plaque d'électrode, et dans laquelle la plaque de collecteur de courant (120) est connectée électriquement à une première section non revêtue (111a) de la première plaque d'électrode ou à une seconde section non revêtue (112a) de la seconde plaque d'électrode.
